# EUROPEAN PATENT SPECIFICATION

(11) **EP 0 501 655 B1**
(45) Date of publication and mention of the grant of the patent: **03.05.1995**
(21) Application number: 92301314.8
(22) Date of filing: 18.02.1992
(51) Int. Cl.: G06F 1/32

(54) **Reducing power consumption in a digital processor**
Leistungsverbrauchreduzierung in einem digitalen Prozessor
Réduction de consommation d'énergie dans un processeur numérique

(30) Priority: 25.02.1991 JP 50307/91
(43) Date of publication of application: 02.09.1992
(73) Proprietor: International Business Machines Corporation, Armonk, N.Y. 10504 (US)
(72) Inventor: Suzuki, Naoshi, Kawasaki-ku, Kanagawa-ken (JP); Uno, Shunya, Machida-shi, Tokyo (JP)
(74) Representative: Burt, Roger James, Dr.

(56) References cited:
- US-A- 4 734 871
- IBM TECHNICAL DISCLOSURE BULLETIN. vol. 32, no. 8B, January 1990, NEW YORK USpage 373 , XP82143 'Dynamic power management by clock speed variation'
- MOTOROLA TECHNICAL DEVELOPMENTS vol. 14, December 1991, SCHAUMBURG, ILLINOIS USpages 53 - 54 , XP276157 CHARLES P. SCHULTZ 'Dynamic clock control formycroprocessor system energy management'

## Description

The present invention relates to reducing the power consumption of a digital processor. Such reduction is desirable particularly to reduce heat dissipation in data processing apparatus including digital processors.

In a known type of processor the contents of its internal registers are not lost even if the supply of a clock signal to the processor is stopped. Operations can be resumed from the stop state by reopening the supply of the clock signal. Such a processor is referred to herein as a full-static processor and, if it uses CMOS logic, power consumption and heat dissipation can be greatly reduced by stopping the supply of a clock signal to the processor, or decreasing the frequency of the clock signal, while the processor is idle.

Japanese Published Unexamined Patent Application (PUPA) No.62-169219 (U.S. Pat. No.4,851,987) discloses an information processing system in which the supply of a clock signal to a processor is stopped according to a result of the execution of a program which determines whether the system is currently in a state where it waits for the completion of an operation of an input/output device or key input by an operator. However, even though the system waits for the completion of the operation of the input/output device or key input by the operator, the processor is not always used to be in an idle time. Particularly, in an information processing system using a multi-tasking operating system, possibility that a processor runs a second task while waiting for the completion of an operation of an input/output device or key input by an operator is not insignificant. In such a conventional apparatus there is therefore a danger that the supply of a clock signal to the processor may be stopped while the processor runs the task.

IBM Technical Disclosure Bulletin Vol.32, No. 8B, published in January 1990 in Armonk, NY, US, page 373, "Dynamic Power Management by Clock Speed Variation", discloses a technique for power conservation in a personal computer wherein the task dispatcher of a multi-tasking operating system stops or slows the system clock when it detects that no tasks are ready to run.

It is accordingly an object of the present invention to provide an information processing system and an alternative method for operating such a system which minimises the danger of stopping the supply of the clock signal to the processor while the processor runs a task.

According to the present invention there is provided a method for controlling a processor clock signal in an information processing apparatus using a multi-tasking operating system, wherein the supply of the processor clock signal to a processor in the apparatus is controlled by a program which runs in the lowest priority under said multi-tasking operating system.

There is further provided an information processing system including a full static processor, a clock signal generator for supplying a clock signal to said processor, and a clock signal controller for controlling the supply of the clock signal to said processor from said clock signal generator, in response to a signal sent by a program which runs in the lowest priority under a multi-tasking operating system.

An information processing system is usually provided with a system timer for synchronising the entire system in addition to a generator or oscillator for generating the clock signal to be supplied to the processor. Under the multi-tasking operating system, tasks to run are switched to one another according to a priority given to each task for each time interval indicated by the system timer. Now in a case where a program (clock control program) that controls the supply of the clock signal to the processor is provided, and the clock control program is given the lowest priority, the clock control program runs if only the clock control program runs and any other tasks does not run, that is, only if the processor may be stopped. Thereby, the supply of the clock signal to the processor can be certainly controlled on or off for each time interval indicated by the system timer. Instead of stopping the supply of the clock signal to the processor, the frequency of the clock signal may be controlled so that it can be decreased.

In order that the invention may be well understood a preferred embodiment thereof will now be described by reference to the accompanying drawings, in which:-

FIG.1 is a time chart showing the operations of an embodiment of an information processing system constructed in accordance with the present invention.

FIG.2 is a block diagram showing the overall construction of said embodiment.

FIG.3 is a flowchart showing a method for controlling processor clock signals and processing steps according to the present invention.

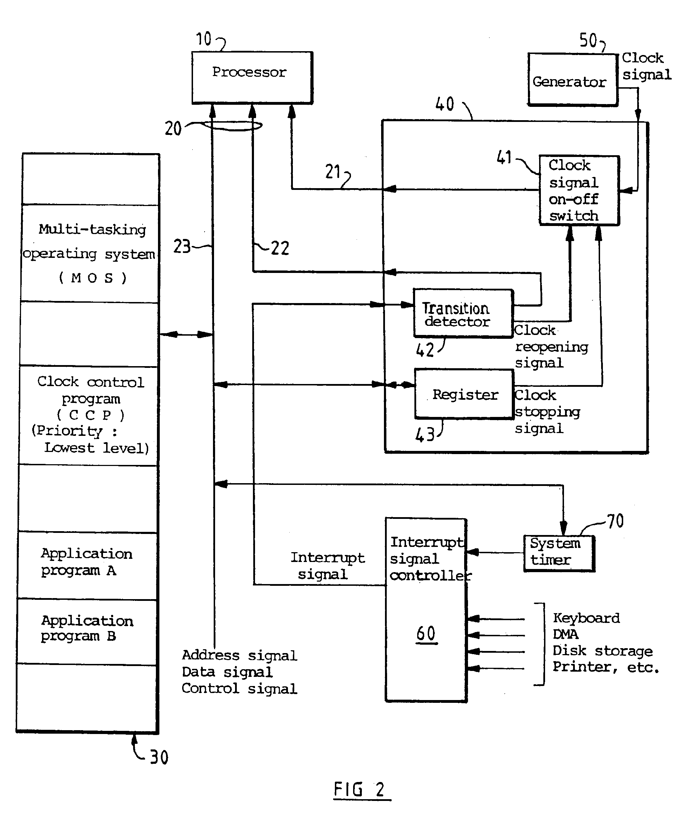

FIG.2 shows the overall construction of an embodiment of an information processing system according to the present invention. Referring to the figure, a processor 10 connects to a clock signal line 21, an interrupt signal line 22, and a signal lines 23. The signal line 23 is comprised of a plurality of signal lines for a control signal, an address signal, and a data signal other than an interrupt signal and connected to a memory 30 and a system timer 70. The signal line 23 and the interrupt signal line 22 may be called a system bus 20. The memory 30 stores a multi-tasking operating system MOS, a clock control program CCP that runs in the lowest priority under the multi-tasking operating system MOS, and application programs A and B.

The clock signal line 21 and the interrupt signal line 22 connect to a clock signal controller 40. The clock signal controller 40 comprises a clock signal on-off switcher 41, a signal transition detector 42, and a register 43. The clock signal on-off switcher 41 is always supplied with a clock signal for the processor from a generator 50, stopping the supply of the clock signal to the processor 10 in response to a clock stopping signal from the register 43, reopening the supply of the clock signal to the processor 10 in response to a clock reopening signal from the signal transition detector 42. The signal transition detector 42 connects to an interrupt signal controller 60. The signal transition detector 42, when receiving an interrupt signal from the interrupt signal controller 60, gives the interrupt signal to the processor 10 and the clock reopening signal to the clock signal on-off switcher 41.

To the interrupt signal controller 60, in addition to interrupt signals from input/output devices such as a keyboard, a disk storage, a printer, etc., a signal from the system timer are inputted. When receiving these signals, the interrupt signal controller 60 outputs the interrupt signal to the signal transition detector 42. Thereby, except that the interrupt signals from the input/output devices are received, the supply of the clock signal to the processor 10 is reopened when the system timer 70 indicates the lapse of a predetermined time. Under the multi-tasking operating system MOS, task execution is switched for each time interval indicated by the system timer 70. The register 43 is used for receiving and holding a result of the execution of the clock control program CCP given the lowest priority.

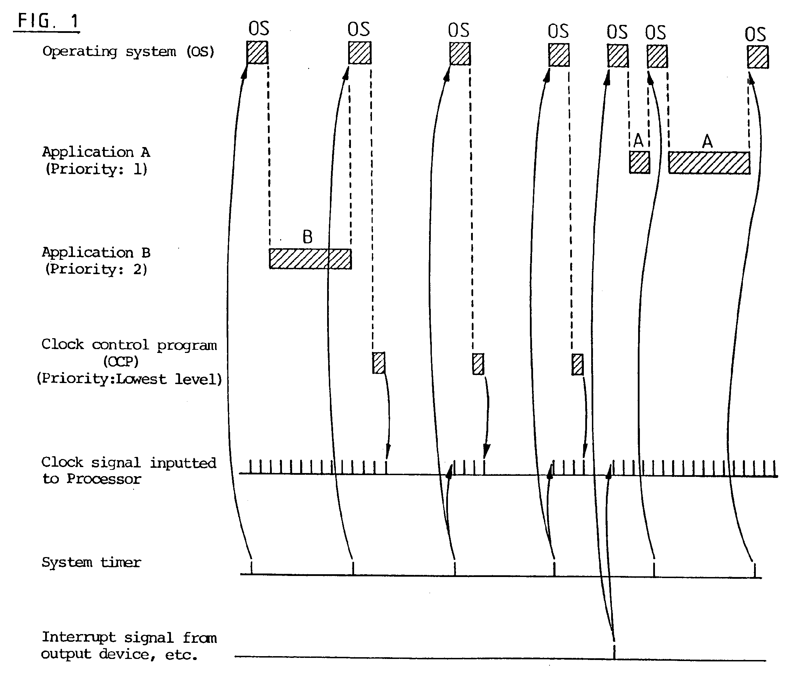

Now the operations of the embodiment are described by reference to FIG.1 in addition to FIG.2. Generally, in the multi-tasking operating system, a task scheduler, which is one of the component programs of the operating system, switches tasks on or off based on time slicing in which the task scheduler gives plural tasks the execute right of the processor according to their priority for each predetermined time interval at the completion of a running task or based on a event-driven method in which the execute right of the processor is transferred in response to occurrence of an event such as an interruption, as in the embodiment. Time quanta of time slices are determined by the system timer 70.

FIG.1 shows a state where the execution of plural tasks including the clock control program CCP given the lowest priority is switched under the multi-tasking operating system OS and a condition that the supply of a clock signal to the processor 10 is controlled on or off. Now if the system timer 70 issues a signal indicating the lapse of a predetermined time interval over the signal line 23 while the application program B given priority 2 is running, an object of program execution temporarily changes from the application program B to the operating system OS. The operating system OS not only determines whether the application program B has the execute right of the processor 10 even in the following quantum of time, but also selects any of programs that require the execute right of the processor 10 in the following quantum of time and gives it the execution right.

FIG.1 shows a case where only the clock control program CCP requires the execute right of the processor 10. In this case, the clock control program CCP runs and, as a result, a signal indicating that a clock signal may be stopped is sent to the register 43 of the clock controller 40 through the signal line 23. Since the clock control program CCP does nothing but simple work as described above, its execution time is very short. The register 43 not only holds said signal, but also provides a clock stopping signal to the clock signal on-off switcher 41 to stop the supply of the clock signal to the processor 10.

If the supply of the clock signal to the processor 10 stops and then the system timer 70 issues a signal indicating the lapse of a predetermined time, the interrupt signal controller 60 provides an interrupt signal to the signal transition detector 42 and then the signal transition detector 42 provides a clock reopening signal to the clock signal on-off switcher 41 to not only reopen the supply of the clock signal to the processor 10, but also provide an interrupt signal to the processor 10. The processor 10, on receiving the interrupt signal, prompts a timer interrupt handler and a dispatcher, which are the component programs of the operating system OS, to run and determines a program to be run in the following quantum of time after they run.

FIG.1 shows also a case where a program to be run in the following quantum of time is only the clock control program CCP. Also in this case, the clock control program CCP runs to stop the supply of a clock signal to the processor 10. If the interrupt signal controller 60 issues an interrupt signal while the supply of the clock signal to the processor 10 is stopping, not only the supply of the clock signal to the processor 10 is reopened, but also the operating system OS performs functions to determine a program to be run in the following quantum of time. If the program to be run is the application program A given priority 1, the application program A runs until the system timer 70 issues the following signal. When the system timer 70 issues the signal, the operating system functions to determine a program to be run in the following quantum of time and if the program thus determined is the application program A, the program A runs again until the system timer 70 issues the following signal.

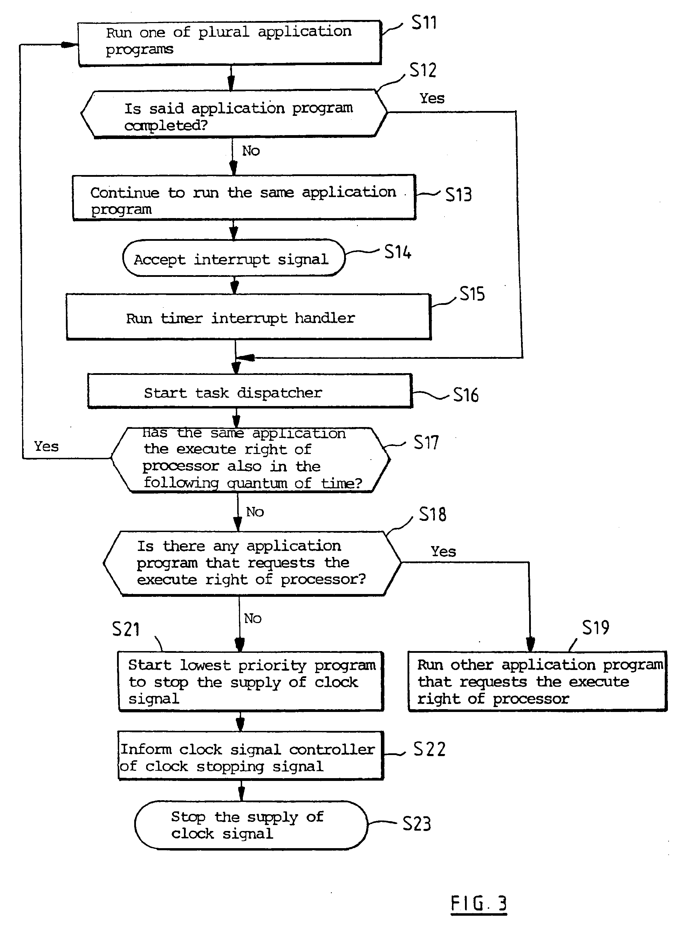

FIG.3 shows processing steps for stopping the supply of a clock signal to the processor under the multi-tasking operating system. In the figure, both an interrupt handler and a task dispatcher are the component programs of a task scheduler of the operating system. The interrupt handler is a program that runs in response to an interrupt signal to do work required for stopping and then reopening an application running before receiving the interrupt signal. The task dispatcher is a program that determines the following task to be run according to priority given to each task and transfers the execute right of the processor to the task thus determined.

Referring to FIG.3, in a step S11 an application program given priority other than the lowest priority runs. In a subsequent step S12, whether said application program is completed or not is determined. If the application program is not completed, the processing proceeds to a step S13 where the application program continues to run. If the application program is completed, the processing proceeds to a step S16. If an interrupt signal is encountered in a step S14 during the run of the application program, the processing proceeds to a step S15 where the interrupt handler runs and then the task dispatcher is started in the step S16. The task dispatcher determines whether the running application program is authorised to run also in the subsequent quantum of time or not (in a step S17). If the application program is authorised to run in the subsequent quantum of time, the processing returns to the step S11. If the application program is not authorised to run, whether another application program requests authorisation for running or not is determined in a step S18. If another application requests to be authorised to run, the application program runs in a step S19. Otherwise, the processing proceeds to a step S21 where the clock control program (given the lowest priority) for stopping a clock signal is started. In a subsequent step S22, the clock control program runs to send a signal indicating that the supply of the clock signal is stopped, to the register 43 of the clock signal controller 40 and in a step S23 the supply of the clock signal is stopped.

According to the above embodiment, since the clock control program runs only if there is no other tasks to be run, the supply of the clock signal is not in danger of being stopped while some task is running in a background. Further, according to the embodiment, since the on-off control for the clock signal is performed for each timer interval indicated by the system timer, the clock signal is stopped in a small slice of the idle time for the processor and thereby low power dissipation is offered.

It will be recognised that said clock signal controller 40 may be connected to a processor, other than the processor 10 and added to another program. It will be appreciated that instead of stopping the supply of a clock signal to the processor 10, the frequency of the clock signal may be decreased to attempt low power dissipation.

As described above, according to the present invention, a method and an information processing system which ensure that an allowed time to stop a processor or an allowed time to delay an operation of the processor is determined to stop the supply of a clock signal to the processor or decrease the frequency of the clock signal, can be provided.

## Claims

1. A method for controlling a processor clock signal in an information processing apparatus using a multi-tasking operating system, wherein the supply of said processor clock signal to a processor (10) in said apparatus is controlled by a program which runs in the lowest priority under said multi-tasking operating system.

2. The method for controlling a processor clock signal according to claim 1 wherein said program is adapted to open or to close the supply of said clock signal to the processor.

3. The method for controlling a processor clock signal according to claim 1 wherein said program is adapted to change the frequency of the clock signal provided to the processor from an operating frequency to a reduced frequency and vice versa.

4. An information processing system including a full static processor (10), a clock signal generator (50) for supplying a clock signal to said processor (10), and a clock signal controller (40) for controlling the supply of the clock signal to said processor (10) from said clock signal generator, (50) wherein said clock signal controller (40) controls the supply of said clock signal to said processor (10) in response to a signal sent by a program which runs in the lowest priority under a multi-tasking operating system.

5. A system as claimed in claim 4 in which said clock signal controller is adapted to change the frequency of said clock signal from an operating frequency to a reduced frequency and vice versa.

6. A system as claimed in claim 4 in which said clock signal controller is adapted to open or to close the supply of said clock signal to said processor.

7. The information processing system according to claim 6 wherein said clock signal controller is adapted to reopen the supply of a clock signal to said processor in response to an interrupt signal to said processor.

8. The information processing system according to claim 7 wherein said interrupt signal is an output signal from a system timer (70) for synchronising the entire information processing system.

9. An information processing system as claimed in any of claims 4 to 8 including a memory (30), a processor (10), an input/output device, a generator (50) for supplying a clock signal to said processor, and a system timer (70) for synchronising among the parts of the system, wherein a clock signal controller (40) is provided for the purpose of stopping the supply of the clock signal to the processor under the control of a program that runs in the lowest priority under a multi-tasking operating system and reopening the supply of said clock signal in response to an interrupt signal from said input/output device or said system timer (70).

## Patentansprüche

1. Eine Methode zum Steuern eines Prozessor-Taktsignals in einer Informationsverarbeitungseinheit mit einem Multitasking-Betriebssystem, bei der die Weiterleitung des genannten Prozessor-Taktsignals an einen Prozessor (10) in der genannten Einheit von einem Programm gesteuert wird, das unter dem genannten Multitasking-Betriebssystem in der untersten Priorität läuft.

2. Die Methode zum Steuern eines Prozessor-Taktsignals gemäß Anspruch 1, bei der das genannte Programm so adaptiert ist, daß die Weiterleitung des genannten Taktsignals zum Prozessor geöffnet oder geschlossen wird.

3. Die Methode zum Steuern eines Prozessor-Taktsignals gemäß Anspruch 1, bei der das genannte Programm so adaptiert ist, daß die Frequenz des dem Prozessor bereitgestellten Taktsignals von einer Betriebsfrequenz auf eine reduzierte Frequenz und umgekehrt verändert wird.

4. Ein Informationsverarbeitungssystem mit einem vollstatischen Prozessor (10), einem Taktsignalgeber (50) zum Senden eines Taktsignals zu dem genannten Prozessor (10), und einem Taktsignal-Controller (40) zum Steuern der Weiterleitung des Taktsignals zu dem genannten Prozessor (10) vom genannten Taktsignalgeber (50), bei dem der genannte Taktsignal-Controller (40) die Weiterleitung des genannten Taktsignals zu dem genannten Prozessor (10) steuert, in Antwort auf ein Signal, das von einem in der untersten Priorität unter einem Multitasking-Betriebssystem laufenden Programm gesendet wird.

5. Ein System nach Anspruch 4, in dem der genannte Taktsignal-Controller so adaptiert ist, daß die Frequenz des genannten Taktsignals von einer Betriebsfrequenz in eine reduzierte Frequenz und umgekehrt verändert wird.

6. Ein System nach Anspruch 4, in dem der genannte Taktsignal-Controller so adaptiert ist, daß er die Weiterleitung des genannten Taktsignals zu dem genannten Prozessor öffnet oder schließt.

7. Das Informationsverarbeitungssystem gemäß Anspruch 6, bei dem der genannte Taktsignal-Controller so adaptiert ist, daß er die Weiterleitung eines Taktsignals zu dem genannten Prozessor in Antwort auf ein Interrupt-Signal zu dem genannten Prozessor wieder öffnet.

8. Das Informationsverarbeitungssystem nach Anspruch 7, bei dem das genannte Interrupt-Signal ein Ausgangssignal von einem System-Zeitgeber (70) ist, der das gesamte Informationsverarbeitungssystem synchronisiert.

9. Ein Informationsverarbeitungssystem nach jedem der Ansprüche 4 bis 8, einen Speicher (30), einen Prozessor (10), ein Ein-/Ausgabegerät, einen Geber (50) zum Senden eines Taktsignals an den genannten Prozessor, und einen System-Zeitgeber (70) zum Synchronisieren der einzelnen Systemteile enthaltend, bei dem ein Taktsignal-Controller (40) bereitgestellt wird, um die Weiterleitung des Taktsignals an den Prozessor unter Steuerung eines Programms zu stoppen, das in der untersten Priorität unter einem Multitasking-Betriebssystem läuft, und um die Weiterleitung des genannten Taktsignals in Antwort auf ein Interrupt-Signal von der genannten Ein-/Ausgabe-einrichtung oder dem genannten System-Zeitgeber (70) wieder zu öffnen.

## Revendications

1. Procédé de contrôle d'un signal d'horloge de processeur dans un appareil de traitement d'informations utilisant un système d'exploitation multitâche, dans lequel l'alimentation dudit signal d'horloge sur un processeur (10) dans ledit appareil est contrôlée par un programme qui exécute avec la priorité la plus faible dans ledit système d'exploitation multitâche.

2. Procédé de contrôle d'un signal d'horloge de processeur selon la revendication 1, dans lequel ledit programme est adapté pour ouvrir ou pour fermer la source d'alimentation du signal d'horloge sur le processeur.

3. Procédé de contrôle d'un signal d'horloge de processeur selon la revendication 1, dans lequel ledit programme est adapté pour faire passer la fréquence du signal d'horloge fourni au processeur d'une fréquence de fonctionnement à une fréquence réduite, et vice versa.

4. Système de traitement d'informations comprenant un processeur totalement statique (10), un générateur de signal d'horloge (50) pour fournir un signal d'horloge audit processeur (10), et un contrôleur de signal d'horloge (40) pour contrôler l'alimentation dudit signal d'horloge sur ledit processeur (10) à partir dudit générateur de signal d'horloge (50), dans lequel ledit contrôleur de signal d'horloge (40) contrôle l'alimentation dudit signal d'horloge sur ledit processeur (10) en réponse à un signal envoyé par un programme qui exécute avec la priorité la plus faible dans un système d'exploitation multitâche.

5. Système selon la revendication 4, dans lequel ledit contrôleur de signal est adapté pour faire passer la fréquence dudit signal d'horloge d'une fréquence de fonctionnement à une fréquence réduite, et vice versa.

6. Système selon la revendication 4, dans lequel ledit contrôleur de signal d'horloge est adapté pour ouvrir ou fermer la source d'alimentation dudit signal d'horloge sur ledit processeur.

7. Système de traitement d'informations selon la revendication 6, dans lequel ledit contrôleur de signal d'horloge est adapté pour rouvrir la source d'alimentation d'un signal d'horloge sur ledit processeur en réponse à un signal d'interruption appliqué audit processeur.

8. Système de traitement d'informations selon la revendication 7, dans lequel ledit signal d'interruption est un signal de sortie provenant d'un synchronisateur de système (70) pour synchroniser tout le système de traitement d'informations.

9. Système de traitement d'informations selon l'une quelconque des revendications 4 à 8, comprenant une mémoire (30), un processeur (10), un dispositif entrée/sortie, un générateur (50) pour fournir un signal d'horloge audit processeur, et un synchronisateur de système (70) pour synchroniser les différentes parties du système, dans lequel un contrôleur de signal d'horloge (40) est fourni dans le but d'arrêter l'alimentation d'un signal d'horloge sur le processeur sous le contrôle d'un programme qui exécute avec la priorité la plus faible dans un système d'exploitation multitâche, et de rouvrir la source d'alimentation dudit signal d'horloge en réponse à un signal d'interruption provenant dudit dispositif d'entrée/sortie ou dudit synchronisateur de système (70).
